# EUROPEAN PATENT APPLICATION

(11) **EP 2 709 392 A1**
(43) Date of publication of application: **19.03.2014**
(21) Application number: 12800331.6
(22) Date of filing: 16.04.2012
(51) Int. Cl.: H04W 8/26

(54) **PROCESSING METHOD AND SYSTEM FOR INITIATING RADIO REMOTE UNIT**

(30) Priority: 17.06.2011 CN 201110163762
(71) Applicant: ZTE Corporation, Shenzhen, Guangdong 518057 (CN)
(72) Inventor: TIAN, Yuan, Shenzhen Guangdong 518057 (CN); HUANG, Hai, Shenzhen Guangdong 518057 (CN); MA, Guangyu, Shenzhen Guangdong 518057 (CN)
(74) Representative: Tischner, Oliver
(86) International application number: PCT/CN2012/074146
(87) International publication number: WO 2012/171409

(57) **Abstract**

A method for processing a startup of a radio remote unit is disclosed in the present document, which comprises: a baseband processing unit searching for a first radio remote unit which is not configured with an ID from accessing radio remote units; the baseband processing unit allocating a virtual ID for the first radio remote unit from preset virtual IDs; and the first radio remote unit executing a startup operation according to the virtual ID. Meanwhile, a system for processing a startup of the radio remote unit is also disclosed in the present document. With the present document, the radio remote unit, which is not configured with an ID allocated by the network management, is still enabled to start normally.

## Description

### Technical Field

The present document relates to the field of wireless communication technology, and particularly, to a method and system for processing a self-startup of a radio remote unit.

### Background of the Related Art

In the related art, after the radio remote unit accesses a baseband processing unit, if it is required to start normally, it still needs to depend on the network management. That is, after the radio remote unit accesses the baseband processing unit, in a condition that the radio remote unit communicates with the baseband processing unit normally, the network management side sends an Identity number (ID) to the radio remote unit via the baseband processing unit, and the radio remote unit can start normally and work after receiving the ID sent by the network management.

But sometimes the network management does not configure corresponding ID information for the radio remote unit, thus the radio remote unit cannot start at this point.

### Summary of the Invention

The main object of the present document is to provide a method and system for processing a startup of a radio remote unit, to enable the radio remote unit which is not configured with an ID allocated by the network management, to still start normally.

The present document provides a method for processing a startup of a radio remote unit, which comprises:
a baseband processing unit searching for a first radio remote unit which is not configured with an Identity number (ID) from accessing radio remote units;
the baseband processing unit allocating a virtual ID for the first radio remote unit from preset virtual IDs; and
the first radio remote unit executing a startup operation according to the virtual ID.

Preferably, after the first radio remote unit executes the startup operation according to the virtual ID, the method further comprises:
the first radio remote unit sending relevant information of the first radio remote unit to a network management;
the network management allocating an ID for the first radio remote unit according to the relevant information of the radio remote unit, and sending the ID to the first radio remote unit; and
the first radio remote unit updating the virtual ID which has been configured as the ID allocated by the network management.

Preferably, after the baseband processing unit searches for the first radio remote unit which not configured with the ID from the radio remote units accessing the baseband processing unit, the method further comprises:
the baseband processing unit searching for a second radio remote unit which is configured with a virtual ID from the radio remote units accessing the baseband processing unit; and judging whether the virtual ID configured for the second radio remote unit has been updated as the ID allocated by the network management; and
if yes, the baseband processing unit releasing the virtual ID of the second radio remote unit.

Preferably, the radio remote unit accessing the baseband processing unit is as follows:
a first optical port of the radio remote unit being connected with a second optional port of an interface board in the baseband processing unit via optical fiber; an optical port rate of the first optical port of the radio remote unit being identical with an optical port rate of the second optical port of the interface board in the baseband processing unit, and normal communication being performed.

Preferably, the optical port rate of the first optical port of the radio remote unit being identical with the optical port rate of the second optical port of the interface board in the baseband processing unit, comprises:
after being power on, the radio remote unit performing switching of the optical port rate of the first optical port in a cycle of a first interval time;
after the baseband processing unit is power on, the interface board performing switching of the optical port rate of the second optical port in a cycle of a second interval time; and
when the optical port rate of the first optical port of the radio remote unit is identical with the optical port rate of the second optical port of the interface board of the baseband processing unit, the radio remote unit keeping the optical port rate of the first optical port unchanged, and the baseband processing unit keeping the optical port rate of the second optical port of the interface board unchanged.

The present document further provides a system for processing a startup of a radio remote unit, which comprises: a baseband processing unit and radio remote units; wherein,
the baseband processing unit is configured to: search for a first radio remote unit which is not configured with an Identity number (ID) from radio remote units accessing the baseband processing unit; and allocate a virtual ID for the first radio remote unit in the radio remote units from preset virtual IDs; and
the radio remote unit is configured to: execute a startup operation of the first radio remote unit according to the virtual ID allocated for the first radio remote unit and sent by the baseband processing unit.

Preferably, the system further comprises a network management, wherein, the network management is configured to: allocate an ID according to relevant information of the first radio remote unit sent by the baseband processing unit, and send the allocated ID to the baseband processing unit;
correspondingly, the baseband processing unit is specifically configured to: forward the relevant information of the first radio remote unit sent by the radio remote unit to the network management, and forward the ID which is allocated by the network management to the first radio remote unit to the first radio remote unit; and
the radio remote unit is further configured to: after the first radio remote unit executes the startup operation according to the virtual ID, send the relevant information of the first radio remote unit to the baseband processing unit, and after receiving the ID allocated by the network management and returned by the baseband processing unit, update the virtual ID configured for the first radio remote unit as the ID allocated by the network management.

Preferably, the radio remote unit is further configured to: provide a second radio remote unit for the baseband processing unit, and release a virtual ID of the second radio remote unit according to an operation of the baseband processing unit;
correspondingly, the baseband processing unit is further configured to: search for a second radio remote unit configured with a virtual ID from the radio remote units accessing the baseband processing unit; judge whether the virtual ID configured for the second radio remote unit has been updated as the ID allocated by the network management; and when the virtual ID configured for the second radio remote unit has been updated as the ID allocated by the network management, release the virtual ID of the second radio remote unit.

Preferably, the radio remote unit is specifically configured as: when accessing the baseband processing unit, a first optical port being connected with a second optional port of an interface board in the baseband processing unit via optical fiber; an optical port rate of the first optical port being identical with an optical port rate of the second optical port of the interface board in the baseband processing unit, and normal communication being performed;
correspondingly, the baseband processing unit is specifically configured as: when there is a radio remote unit accessing the baseband processing unit, a second optional port of an interface board of the baseband processing unit being connected with a first optical port of the radio remote unit via optical fiber; an optical port rate of the second optical port of the interface board being identical with an optical port rate of the first optical port of the radio remote unit, and normal communication being performed.

Preferably, the radio remote unit is specifically configured to make the optical port rate of the first optical port be identical with the optical port rate of the second optical port of the interface board in the baseband processing unit by means of: after being power on, performing switching of the optical port rate of the first optical port in a cycle of a first interval time; and when the optical port rate of the first optical port is identical with the optical port rate of the second optical port of the interface board of the baseband processing unit, keeping the optical port rate of the first optical port unchanged;
correspondingly, the baseband processing unit is specifically configured to: after being power on, make the interface board perform switching of the optical port rate of the second optical port in a cycle of a second interval time, and when the optical port rate of the second optical port of the interface board is identical with the optical port rate of the first optical port of the radio remote unit, keep the optical port rate of the second optical port of the interface board unchanged.

With the method and system for processing a startup of the radio remote unit provided in the present document, the baseband processing unit searches for the first radio remote unit which is not configured with the ID from the radio remote units accessing the baseband processing unit, and allocates the virtual ID for the first radio remote unit, and the first radio remote unit executes the startup operation according to the allocated virtual ID, it is guaranteed that the radio remote unit, which is not configured with an ID allocated by the network management, can start normally after accessing the baseband processing unit.

### Brief Description of Drawings

FIG. 1 is a flow diagram of an example of a method for processing a startup of a radio remote unit according to the present document.
FIG. 2 is another flow diagram of an example of the method for processing a startup of a radio remote unit according to the present document.
FIG. 3 is another flow diagram of an example of the method for processing a startup of a radio remote unit according to the present document.
FIG. 4 is a structural diagram of an example of a system for processing a startup of a radio remote unit according to the present document.
FIG. 5 is another structural diagram of an example of the system for processing a startup of a radio remote unit according to the present document.
FIG. 6 is another structural diagram of an example of the system for processing a startup of a radio remote unit according to the present document.

The implementation of the object, functional characteristics and advantages of the present document will be further described with reference to the accompanying drawings and in combination with the examples.

### Preferred Embodiments of the Invention

It should be understood that, the specific examples described here are only used to explain the present document, which is not used to limit the present document.

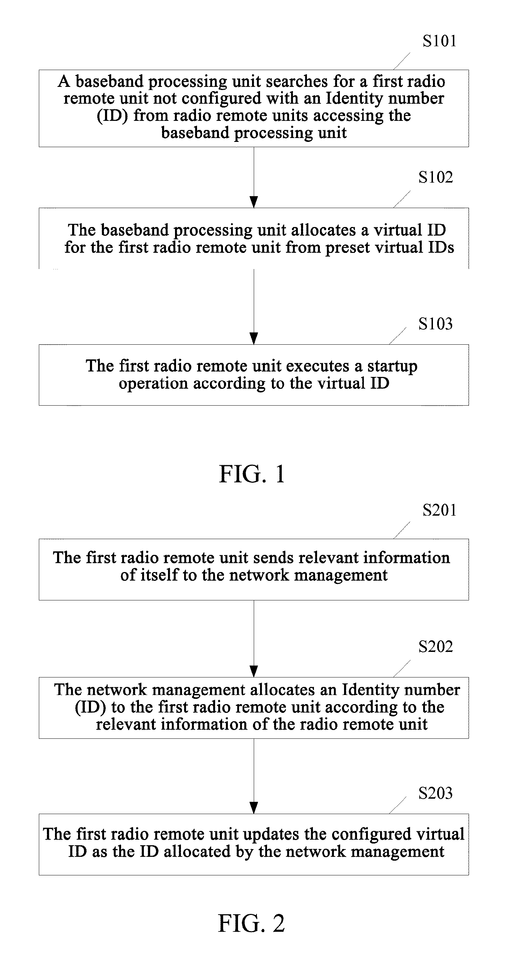

With reference to FIG. 1, the example of the method for processing a startup of a radio remote unit according to the present document is provided, and the following steps are included.

In step S101, a baseband processing unit searches for a first radio remote unit not configured with an ID from radio remote units accessing the baseband processing unit.

Wherein, the first radio remote unit is a radio remote unit which is not configured with an ID allocated by the network management.

In step S102, the baseband processing unit allocates a virtual ID for the first radio remote unit from preset virtual IDs.

In step S103, the first radio remote unit executes a startup operation according to the virtual ID.

In the related art, a prerequisite that the radio remote unit can start normally is that, first, the radio remote unit accesses the baseband processing unit, and second, the radio remote unit is configured with an ID allocated by the network management.

In the example, the radio remote unit which is not configured with the ID allocated by the network management and accesses the baseband processing unit is enabled to implement the normal startup. In the example, the above baseband processing unit presets multiple virtual IDs, which are used to be allocated to a first radio remote unit which is not configured with an ID allocated by the network management, to make the first radio remote unit start normally.

Furthermore, with reference to FIG. 2, in the above example of the method for processing startup of the radio remote unit, after the step S103, the following steps are also included.

In step S201, the first radio remote unit sends relevant information of itself to the network management.

In step S202, the network management allocates an ID to the first radio remote unit according to the relevant information of the radio remote unit.

In step S203, the first radio remote unit updates the configured virtual ID as the ID allocated by the network management.

In the example, after the first radio remote unit starts, it acquires the relevant information of itself, and sends the relevant information of itself to the network management through the baseband processing unit. The network management can know what configuration is required to be performed on the first radio remote unit according to the received relevant information of the radio remote unit, and allocate the ID and other information to the corresponding first radio remote unit, so as to make the corresponding first radio remote unit run in the optimum state. Therefore, in the example, when receiving the relevant information sent by the first radio remote unit, the network management knows that the first radio remote unit is not configured with the ID allocated by the network management itself and allocates the ID to the first radio remote unit. When receiving the ID allocated by the network management, the first radio remote unit updates the configured virtual ID as the ID allocated by the network management, and receives other configuration information so as to make the first radio remote unit itself run succeedingly in the optimum state. Wherein, the relevant information mentioned above includes: physical information, hardware information and optical port rate information and so on.

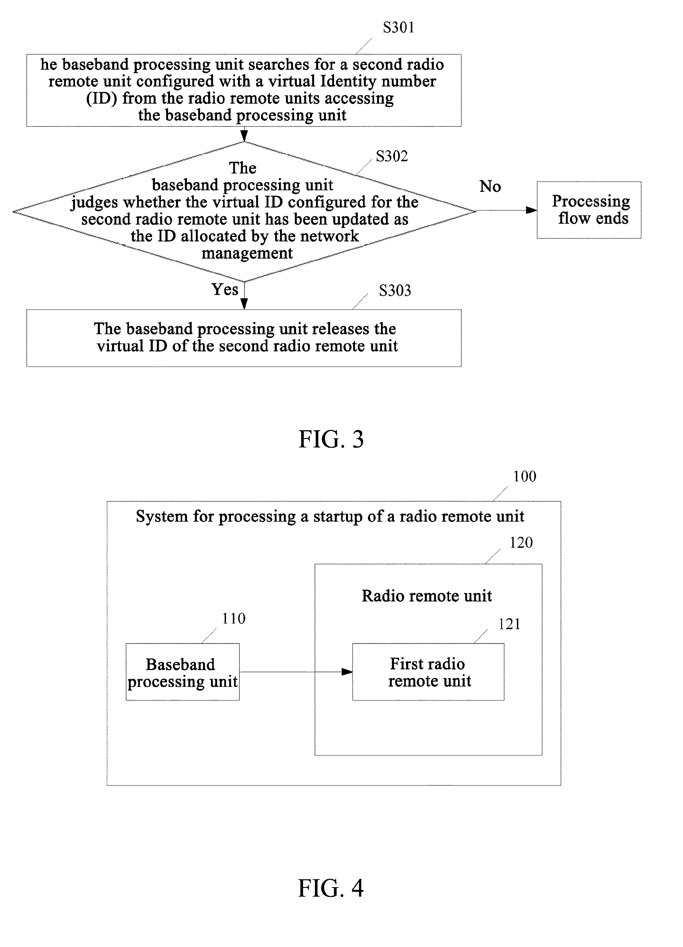

Furthermore, with reference to FIG. 3, in the above example of the method for processing the startup of the radio remote unit, after the step S101, the following steps are also included.

In step S301, the baseband processing unit searches for a second radio remote unit configured with a virtual ID from the radio remote units accessing the baseband processing unit.

Wherein, the second radio remote unit is a radio remote unit configured with the virtual ID in the baseband processing unit.

In step S302, the baseband processing unit judges whether the virtual ID configured for the second radio remote unit has been updated as the ID allocated by the network management; if yes, it is to proceed to step S303; and if no, the flow ends.

In step S303, the baseband processing unit releases the virtual ID of the second radio remote unit.

In the example, a radio remote unit which is configured with the virtual ID and accesses the baseband processing unit is defined as the second radio remote unit. In the example, after the second radio remote unit updates the configured virtual ID as the ID allocated by the network management, the baseband processing unit releases the virtual ID of the second radio remote unit, so as to allocate the released virtual ID to the following first radio remote unit which is not configured with the ID allocated by the network management, thereby guaranteeing the maximum utilization rate of the virtual ID.

Furthermore, in the above example of the method for processing the startup of the radio remote unit, the radio remote unit accessing the baseband processing unit is specifically presented as: a first optical port of the radio remote unit being connected with a second optional port of an interface board in the baseband processing unit via optical fiber; an optical port rate of the first optical port of the radio remote unit being identical with an optical port rate of the second optical port of the interface board in the baseband processing unit, and normal communication being performed.

Furthermore, in the above example of the method for processing the startup of the radio remote unit, the optical port rate of the first optical port of the radio remote unit being identical with the optical port rate of the second optical port of the interface board in the baseband processing unit is specifically implemented by the following way: after being power on, the radio remote unit performing switching of the optical port rate of the first optical port in a cycle of a first interval time; after the baseband processing unit is power on, the interface board performing switching of the optical port rate of the second optical port in a cycle of a second interval time; and when the optical port rate of the first optical port of the radio remote unit is identical with the optical port rate of the second optical port of the interface board in the baseband processing unit, the radio remote unit keeping the optical port rate of the first optical port unchanged, and the baseband processing unit keeping the optical port rate of the second optical port of the interface board unchanged.

In the example, the magnitudes of the optical port rates of the first optical port of the radio remote unit vary in size, wherein, a rule for the radio remote unit performing switching of the optical port rate of the first optical port can be set as performing switching in an ascending order as required or according to user intention, or be set as performing switching in a descending order. Similarly, the magnitudes of the optical port rates of the second optical port of each interface board of the baseband processing unit vary in size. Wherein, a rule for performing switching of the optical port rate of the second optical port of each interface board of the baseband processing unit can be set as performing switching in an ascending order as required or according to user intention, or be set as performing switching in a descending order.

Meanwhile, the first interval time cycle of performing switching of the optical port rate of the first optical port of the radio remote unit and the second interval time cycle of performing switching of the optical port rate of the second optical port of each interface board of the baseband processing unit are required to be set according to the practical situations. Generally, a ratio of the first interval time cycle to the second interval time cycle is 4:1, for example, the first interval time cycle is set as 12 seconds, and the second interval time cycle is set as 3 seconds. Part of the magnitudes of the optical port rates of the first optical port of the radio remote unit are identical with the magnitudes of the optical port rates of the second optical port of the corresponding interface board of the baseband processing unit. Therefore, in the process of switching the optical port rates in the radio remote unit and the baseband processing unit, a moment, at which the optical port rate of the radio remote unit is identical with the optical port rate of the baseband processing unit, always exists, when switching, if the optical port rate of the radio remote unit is identical with the optical port rate of the baseband processing unit, the radio remote unit and the baseband processing unit stop performing switching of optical port rate at this point, and keep corresponding optical port rates be identical. After the radio remote unit and the baseband processing unit keep the corresponding optical port rates be identical, normal communication can be performed.

As can be known from the above description, in the example of the method for processing the startup of the radio remote unit according to the present document, it is guaranteed that the radio remote unit can start normally after accessing the baseband processing unit without a configured ID allocated by the network management.

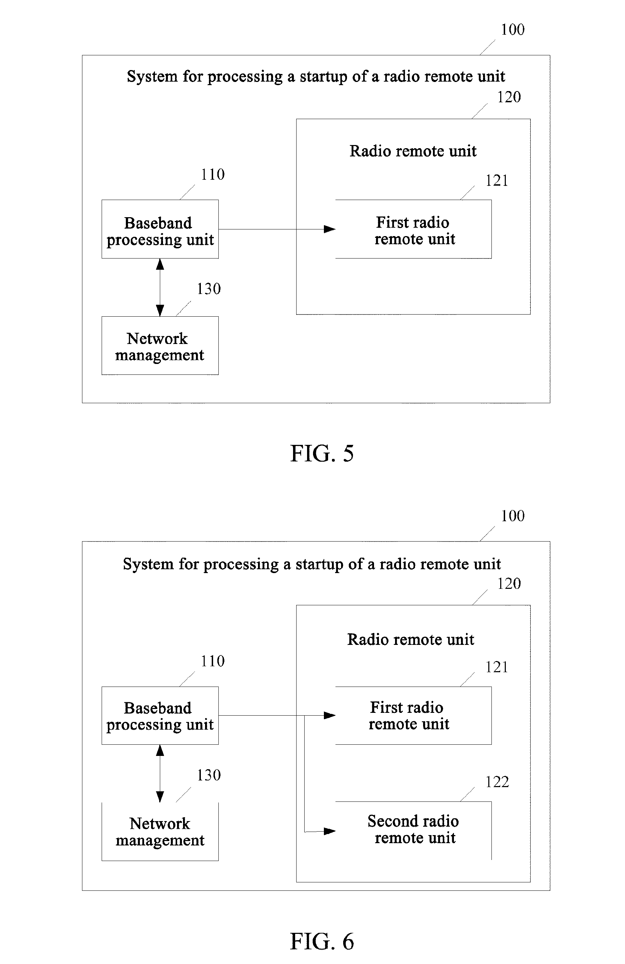

With reference to FIG. 4 and FIG. 5, the example of the system 100 for processing a startup of the radio remote unit according to the present document is provided, a baseband processing unit 110 and radio remote units 120 are included; wherein, radio remote units 120 include a first radio remote unit 121.
the baseband processing unit 110 is used to: search for the first radio remote unit 121 not configured with an ID from radio remote units 120 accessing the baseband processing unit 110; and allocate a virtual ID for the first radio remote unit 121 in the radio remote units 120 from the preset virtual IDs; and
the radio remote unit 120 is used to: execute a startup operation of the first radio remote unit 121 according to the virtual ID allocated to the first radio remote unit 121 and sent by the baseband processing unit 110.

In the related art, a prerequisite that the radio remote unit can start normally is that, first, the radio remote unit 120 accesses the baseband processing unit 110, and second, the radio remote unit 120 is configured with an ID allocated by network management 130.

In the example, the radio remote unit 120, which is not configured with the ID allocated by the network management 130 and accesses the baseband processing unit 110, is enabled to implement the normal startup. A radio remote unit 120 which is not configured with an ID allocated by the network management is defined as the first radio remote unit 121 here. In the example, the above baseband processing unit 110 presets multiple virtual IDs, which are used to be allocated to the first radio remote unit 121 not configured with the ID allocated by the network management, so as to make the first radio remote unit 121 start normally.

Furthermore, with reference to FIG. 5, in the above example of the system 100 for processing the startup of the radio remote unit, the network management 130 is also included, which is used to: allocate an ID according to relevant information of the first radio remote unit 121 sent by the baseband processing unit 110, and send the allocated ID to the baseband processing unit 110; correspondingly, the radio remote unit 120 is further used to: after the first radio remote unit 121 executes the startup operation according to the virtual ID, send the relevant information of the first radio remote unit 121 to the baseband processing unit 110, and after receiving the ID allocated by the network management 130 and sent by the baseband processing unit 110, update the virtual ID configured for the first radio remote unit as the ID allocated by the network management 130; and the baseband processing unit 110 is specifically used to: forward the relevant information of the first radio remote unit 121 sent by the radio remote unit 120 to the network management 130, and forward the ID which is allocated by the network management 130 to the first radio remote unit 121 to the first radio remote unit 121.

In the example, the first radio remote unit 121 is specifically used to: after starting, acquire the relevant information of itself, and send the relevant information of itself to the network management 130 through the baseband processing unit 110, and receive the ID allocated by the network management 130 so as to update the configured virtual ID as the ID allocated by the network management 130, and receive other relevant configuration information so as to make the first radio remote unit 121 itself run succeedingly in the optimum state; correspondingly, the network management 130 is specifically used to: according to the received relevant information of the first radio remote unit 121, acquire how to configure the corresponding first radio remote unit 121, and allocate the ID and other information to the corresponding first radio remote unit 121, so as to make the first radio remote unit 121 run in the optimum state. Wherein, the relevant information mentioned above includes: physical information, hardware information and optical port rate information and so on.

Furthermore, with reference to FIG. 6, in the above example of the system 100 for processing the startup of the radio remote unit, the baseband processing unit 110 is further used to: search for a second radio remote unit 122 configured with a virtual ID from the radio remote units 120 accessing the baseband processing unit 110; judge whether the virtual ID configured for the second radio remote unit 122 has been updated as the ID allocated by the network management 130; and when the virtual ID configured for the second radio remote unit 122 has been updated as the ID allocated by the network management 130, release the virtual ID of the second radio remote unit 122.

In the example, a radio remote unit 120 which is configured with the virtual ID and accesses the baseband processing unit 110 is defined as the second radio remote unit 122. After the second radio remote unit 122 updates the configured virtual ID as the ID allocated by the network management 130, the baseband processing unit 110 releases the virtual ID of the second radio remote unit 122, so as to allocate the released virtual ID to a following first radio remote unit 121 which is not configured with the ID allocated by the network management 130, thereby guaranteeing the maximum utilization rate of the virtual ID.

Furthermore, in the above example of the system 100 for processing the startup of the radio remote unit, the radio remote unit 120 accessing the baseband processing unit 110 is specifically presented as: a first optical port of the radio remote unit 120 being connected with a second optional port of an interface board in the baseband processing unit 110 via optical fiber; an optical port rate of the first optical port of the radio remote unit 120 being identical with an optical port rate of the second optical port of the interface board in the baseband processing unit 110, and normal communication being performed.

Furthermore, in the above example of the system 100 for processing the startup of the radio remote unit, the optical port rate of the first optical port of the radio remote unit 120 being identical with the optical port rate of the second optical port of the interface board in the baseband processing unit 110 is specifically implemented by the following way: after being power on, the radio remote unit 120 performing switching of the optical port rate of the first optical port in a cycle of a first interval time; after the baseband processing unit 110 is power on, the interface board performing switching of the optical port rate of the second optical port in a cycle of a second interval time; when the optical port rate of the first optical port of the radio remote unit 120 is identical with the optical port rate of the second optical port of the interface board of the baseband processing unit 110, the radio remote unit 120 keeping the optical port rate of the first optical port unchanged, and the baseband processing unit 110 keeping the optical port rate of the second optical port of the interface board unchanged.

In the example, the magnitudes of the optical port rates of the first optical port of the radio remote unit 120 vary in size, wherein, a rule of the radio remote unit 120 performing switching of the optical port rate of the first optical port can be set as performing switching in an ascending order as required or according to user intention, or be set as performing switching in a descending order. Similarly, the magnitudes of the optical port rates of the second optical port of each interface board of the baseband processing unit 110 vary in size, wherein, a rule of each interface board of the baseband processing unit 110 performing switching of the optical port rate of the second optical port can be set as performing switching in an ascending order as required or according to user intention, or be set as performing switching in a descending order.

Meanwhile, the first interval time cycle of performing switching of the optical port rate of the first optical port of the radio remote unit 120 and the second interval time cycle of performing switching of the optical port rate of the second optical port of each interface board of the baseband processing unit 110 are required to be set according to the practical situations. Generally, a ratio of the first interval time cycle to the second interval time cycle is 4:1, for example, the first interval time cycle is set as 12 seconds, and the second interval time cycle is set as 3 seconds. Part of the magnitudes of the optical port rates of the first optical port of the radio remote unit 120 are identical with the magnitudes of the optical port rates of the second optical port of the corresponding interface board of the baseband processing unit 110. Therefore, in the process of switching the optical port rates in the radio remote unit 120 and the baseband processing unit 110, a moment, at which the optical port rate of the radio remote unit 120 is identical with the optical port rate of the baseband processing unit 110, always exists, when switching, if the optical port rate of the radio remote unit 120 is identical with the optical port rate of the baseband processing unit 110, the radio remote unit 120 and the baseband processing unit 110 stop performing switching of optical port rate at this point and keep corresponding optical port rates be identical. After the radio remote unit 120 and the baseband processing unit 110 keep the corresponding optical port rates be identical, normal communication can be performed.

As can be known from the above description, in the example of the system 100 for processing the startup of the radio remote unit according to the present document, it is guaranteed that the radio remote unit 120 can start normally after accessing the baseband processing unit 110 without a configured ID allocated by the network management 130.

It should be understood that, the above description is only the preferred examples of the present document, and therefore, it can not be used to limit the patent scope of the present document. Equivalent structures or equivalent flow transformations made with the contents of descriptions and accompanying drawings of the present document, or directly or indirectly applied in other related technical fields, are all included in the patent protection scope of the present document similarly.

## Claims

1. A method for processing a startup of a radio remote unit, comprising:
a baseband processing unit searching for a first radio remote unit which is not configured with an Identity number (ID) from accessing radio remote units;
the baseband processing unit allocating a virtual ID for the first radio remote unit from preset virtual IDs; and
the first radio remote unit executing a startup operation according to the virtual ID.

2. The method according to claim 1, wherein, after the first radio remote unit executes the startup operation according to the virtual ID, the method further comprises:
the first radio remote unit sending relevant information of the first radio remote unit to a network management;
the network management allocating an ID for the first radio remote unit according to the relevant information of the first radio remote unit, and sending the ID to the first radio remote unit; and
the first radio remote unit updating the virtual ID which has been configured as the ID allocated by the network management.

3. The method according to claim 1, wherein, after the baseband processing unit searches for the first radio remote unit which is not configured with the ID from the radio remote units accessing the baseband processing unit, the method further comprises:
the baseband processing unit searching a second radio remote unit configured with a virtual ID from the radio remote units accessing the baseband processing unit;
judging whether the virtual ID configured for the second radio remote unit has been updated as the ID allocated by the network management; and
if yes, the baseband processing unit releasing the virtual ID of the second radio remote unit.

4. The method according to claim 1 or 3, wherein, the radio remote unit accessing the baseband processing unit is as follows:
a first optical port of the radio remote unit being connected with a second optional port of an interface board in the baseband processing unit via optical fiber; an optical port rate of the first optical port of the radio remote unit being identical with an optical port rate of the second optical port of the interface board in the baseband processing unit, and normal communication being performed.

5. The method according to claim 4, wherein, the optical port rate of the first optical port of the radio remote unit being identical with the optical port rate of the second optical port of the interface board in the baseband processing unit, comprises:
after being power on, the radio remote unit performing switching of the optical port rate of the first optical port in a cycle of a first interval time;
after the baseband processing unit is power on, the interface board performing switching of the optical port rate of the second optical port in a cycle of a second interval time; and
when the optical port rate of the first optical port of the radio remote unit is identical with the optical port rate of the second optical port of the interface board of the baseband processing unit, the radio remote unit keeping the optical port rate of the first optical port unchanged, and the baseband processing unit keeping the optical port rate of the second optical port of the interface board unchanged.

6. A system for processing a startup of a radio remote unit, comprising: a baseband processing unit and radio remote units; wherein,
the baseband processing unit is configured to: search for a first radio remote unit which is not configured with an Identity number (ID) from radio remote units accessing the baseband processing unit; and allocate a virtual ID for the first radio remote unit in the radio remote units from preset virtual IDs; and
the radio remote unit is configured to: execute a startup operation of the first radio remote unit according to the virtual ID allocated for the first radio remote unit and sent by the baseband processing unit.

7. The system according to claim 6, further comprising: a network management, wherein, the network management is configured to: allocate an ID according to relevant information of the first radio remote unit sent by the baseband processing unit, and send the allocated ID to the baseband processing unit;
correspondingly, the baseband processing unit is specifically configured to: forward the relevant information of the first radio remote unit sent by the radio remote unit to the network management, and forward the ID which is allocated by the network management to the first radio remote unit to the first radio remote unit; and
the radio remote unit is further configured to: after the first radio remote unit executes the startup operation according to the virtual ID, send the relevant information of the first radio remote unit to the baseband processing unit, and after receiving the ID allocated by the network management and returned by the baseband processing unit, update the virtual ID configured for the first radio remote unit as the ID allocated by the network management.

8. The system according to claim 7, wherein,
the radio remote unit is further configured to: provide a second radio remote unit for the baseband processing unit, and release a virtual ID of the second radio remote unit according to an operation of the baseband processing unit;
correspondingly, the baseband processing unit is further configured to: search for a second radio remote unit configured with a virtual ID from the radio remote units accessing the baseband processing unit; judge whether the virtual ID configured for the second radio remote unit has been updated as the ID allocated by the network management; and when the virtual ID configured for the second radio remote unit has been updated as the ID allocated by the network management, release the virtual ID of the second radio remote unit.

9. The system according to any one of claims 6 to 8, wherein,
the radio remote unit is specifically configured as: when accessing the baseband processing unit, a first optical port of the radio remote unit being connected with a second optional port of an interface board in the baseband processing unit via optical fiber; an optical port rate of the first optical port being identical with an optical port rate of the second optical port of the interface board in the baseband processing unit, and normal communication being performed;
correspondingly, the baseband processing unit is specifically configured as: when there is a radio remote units accessing the baseband processing unit, a second optional port of an interface board of the baseband processing unit being connected with a first optical port of the radio remote unit via optical fiber; an optical port rate of the second optical port of the interface board being identical with an optical port rate of the first optical port of the radio remote unit, and normal communication being performed.

10. The system according to claim 9, wherein,
the radio remote unit is specifically configured to make the optical port rate of the first optical port be identical with the optical port rate of the second optical port of the interface board in the baseband processing unit by means of: after being power on, performing switching of the optical port rate of the first optical port in a cycle of a first interval time; and when the optical port rate of the first optical port is identical with the optical port rate of the second optical port of the interface board of the baseband processing unit, keeping the optical port rate of the first optical port unchanged;
correspondingly, the baseband processing unit is specifically configured to: after being power on, make the interface board perform switching of the optical port rate of the second optical port in a cycle of a second interval time, and when the optical port rate of the second optical port of the interface board is identical with the optical port rate of the first optical port of the radio remote unit, keep the optical port rate of the second optical port of the interface board unchanged.
